# EUROPEAN PATENT SPECIFICATION

(11) **EP 3 495 786 B1**
(45) Date of publication and mention of the grant of the patent: **19.07.2023**
(21) Application number: 18210914.0
(22) Date of filing: 07.12.2018
(51) Int. Cl.: G01G 19/34

(54) **MIXTURE FILLING APPARATUS AND MIXTURE FILLING METHOD**
GEMISCHFÜLLVORRICHTUNG UND GEMISCHFÜLLVERFAHREN
APPAREIL ET PROCÉDÉ DE REMPLISSAGE DE MÉLANGE

(30) Priority: 07.12.2017 JP 2017235246
(43) Date of publication of application: 12.06.2019
(73) Proprietor: Toyo Jidoki Co., Ltd., Tokyo (JP)
(72) Inventor: NAKAMOTO, Kakue, Yamaguchi-ken, Yamaguchi (JP); MATSUMURA, Yuuki, Yamaguchi-ken, Yamaguchi (JP)
(74) Representative: Grünecker Patent- und Rechtsanwälte PartG mbB

(56) References cited:
- DE-A1- 19 810 740
- DE-A1-102009 040 514
- KR-B1- 101 272 626
- US-A- 3 448 967

## Description

### TECHNICAL FIELD

The present invention relates to a mixture filling apparatus and a mixture filling method for introducing a solid material and liquid material into a container.

### BACKGROUND ART

Document DE 10 2009 040514 A1 discloses an apparatus for horticultural mixtures. Therein, several primary products are provided in supply devices and supplied to a metering container.
Furthermore, in the field of food, daily necessities, or the like, introducing a mixture of a solid material and liquid material into a container has been widely practiced. For example, a curry retort pack is produced by enclosing a mixture containing liquid curry roux and a solid ingredient in a bag-like container.

When a container is filled with liquid material and a solid material, for example, there is a method of first introducing the solid material into the container, and then, putting the liquid material in the container. In this method, in order to enclose the solid material and the liquid material in the container in an appropriate ratio, it is preferable to measure the quantity (weight) of the solid material with a measuring instrument and to determine the amount of the liquid material depending on such a measured value.

Various apparatuses have been proposed as such a measuring instrument, and, for example, Japanese patent application publication No. 08-323177 discloses an automatic mixing apparatus that automatically supplies a liquid main agent and a sub agent such as powder by necessary weight and performs stirring and mixing. In this apparatus, weights of the main agent and the sub agent supplied to a mixer are measured with a load measuring instrument (load cell) to achieve reduction in a blending error.

### SUMMARY OF INVENTION

### Technical Problem

As described above, the weight measurement is performed in the mixer to which the main agent and the sub agent are introduced in the apparatus of Japanese patent application publication No. 08-323177. Therefore, it is necessary to stop additional introduction of the main agent and the sub agent to the mixer while the weight measurement is being performed. Therefore, a manufacturing process using the mixer is stopped during the weight measurement, and productivity is inhibited. In addition, conventional measuring instruments have problems such as poor measurement accuracy, an increase in size of an apparatus, and difficulty in maintenance such as cleaning.

The present invention has been made in view of the above circumstances, and an object thereof is to provide a mixture filling apparatus and a mixture filling method capable of mixing liquid material and a solid material at an appropriate ratio and performing a process of introducing a mixture into a container at high speed to improve productivity.

### Solution to Problem

Above object is achieved by a mixture filling apparatus according to claim 1 and a mixture filling method of claim 6. One aspect disclosed herein is directed to a mixture filling apparatus comprising: a solid material supply unit that supplies a solid material; a liquid material supply unit that supplies liquid material; a hopper unit that is capable of storing and releasing the solid material supplied from the solid material supply unit and includes a hopper body and a shutter to open and close a release port of the hopper body; a weighing machine that is connected to the hopper unit and measures weight of the solid material stored in the hopper unit; a mixing tank that stores the solid material supplied from the solid material supply unit via the hopper unit and the liquid material supplied from the liquid material supply unit, and receives the solid material released from the hopper unit when the release port of the hopper body is opened by the shutter; a mixture filling unit that fills a container with a mixture of the solid material and the liquid material stored in the mixing tank; and a control unit that is connected to the weighing machine and the liquid material supply unit, wherein the control unit controls the liquid material supply unit to adjust an amount of the liquid material to be supplied from the liquid material supply unit according to a measurement result of the weighing machine.

The liquid material supply unit includes a discharge port to discharge the liquid material toward an inside of the hopper unit.

The discharge port is arranged to face toward at least one of an inner surface of the hopper body and an inner surface of the shutter.

The liquid material supply unit may discharge the liquid material from the discharge port after the solid material is supplied into the hopper unit from the solid material supply unit, the weighing machine measures the weight of the solid material stored in the hopper unit, and the release port of the hopper body is opened by the shutter.

The mixture filling apparatus may further comprise a stirring unit that stirs the liquid material and the solid material in the mixing tank.

The control unit may acquire the weight of the solid material supplied into the hopper unit according to a difference between a value of weight of the solid material adhered to and remaining in the hopper unit measured by the weighing machine before the solid material is supplied into the hopper unit, and a value of weight of the solid material in the hopper unit measured by the weighing machine after the solid material has been supplied into the hopper unit.

Another aspect disclosed herein to a mixture filling method comprising: a solid material supply step of supplying a solid material to a hopper unit capable of storing and releasing the solid material; a weight measurement step of measuring weight of the solid material stored in the hopper unit after the solid material supply step; a solid material release step of releasing the solid material in the hopper unit into a mixing tank after the weight measurement step; a liquid material supply amount determination step of determining an amount of a liquid material to be supplied into the mixing tank using a value of an optimum supply amount of the liquid material set in advance based on a value of the weight of the solid material according to a measurement result in the weight measurement step, after the weight measurement step; a liquid material supply step of supplying the determined amount of the liquid material from a liquid material supply unit into the mixing tank after the liquid material supply amount determination step; a mixing step of storing in the mixing tank the solid material and the liquid material supplied into the mixing tank in the solid material release step and the liquid material supply step and mixing the solid material and the liquid material which are stored inside the mixing tank; and a mixture filling step of filling a container with the solid material and the liquid material in the mixing tank mixed in the mixing step.

In the liquid material supply step, the liquid material may be supplied toward an inner surface of the hopper unit in such a manner that the solid material adhered to the inner surface of the hopper unit flows down due to the supplied liquid material and is supplied into the mixing tank together with the liquid material.

According to the present invention, it is possible to improve the productivity by mixing the liquid material and the solid material at the appropriate ratio and performing the process of introducing the mixture into the container at high speed.

### BRIEF DESCRIPTION OF DRAWINGS

Fig. 1 is a view illustrating a mixture filling apparatus of a first embodiment;
Fig. 2 is a view illustrating a part of the mixture filling apparatus as viewed along the arrow "II" in Fig. 1;
Fig. 3 is a block diagram illustrating a control system; and
Fig. 4 is a view illustrating a mixture filling apparatus of a second example.

### DESCRIPTION OF EMBODIMENTS

Hereinafter, an embodiment of the present invention will be described with reference to the drawings. A mixture filling apparatus and a mixture filling method to be described hereinafter are an apparatus and a method for introducing liquid material and a solid material blended at a desired ratio into a container.

The liquid material is typically indefinite liquid having fluidity, and physical properties such as a specific type and viscosity thereof do not matter. The liquid material supplied from a liquid material supply unit to be described later partially contains such liquid or is entirely such liquid, and has fluidity as a whole. Meanwhile, the solid material is an object composed of one or a plurality of solids, and a gel body, a paste body, particles, and powder are also included in the concept of the solid material in addition to a general solid material. The solid material supplied from a solid material supply unit to be described later partially contains such an object or is entirely such an object. An optimum amount of the liquid material of the present embodiment has been determined depending on weight of the solid material, and the optimum amount of the liquid material is mixed into the solid material so that a mixture in which the liquid material and the solid material are blended at a desired ratio is introduced into a container. Applications of the mixture thus obtained are not particularly limited, and the mixture is typically used as food and daily necessaries.

In addition, the container into which the mixture is introduced is not limited, and the mixture of the liquid material and the solid material is introduced into the container via an opening. Therefore, a bag made of a flexible material such as polyethylene, a bottle made of a relatively rigid material such as polyethylene terephthalate (PET), or a container made of other materials can be used as the container. In addition, a position and a form of the opening of the container are not limited either, a mouth portion formed in the ceiling of the container can be typically used as the opening, but an instrument such as a spout communicating the inside and the outside of the container may be used as the opening, or a mouth portion or an instrument provided at a location other than the ceiling portion of the container may be used as the opening.

### [First Embodiment]

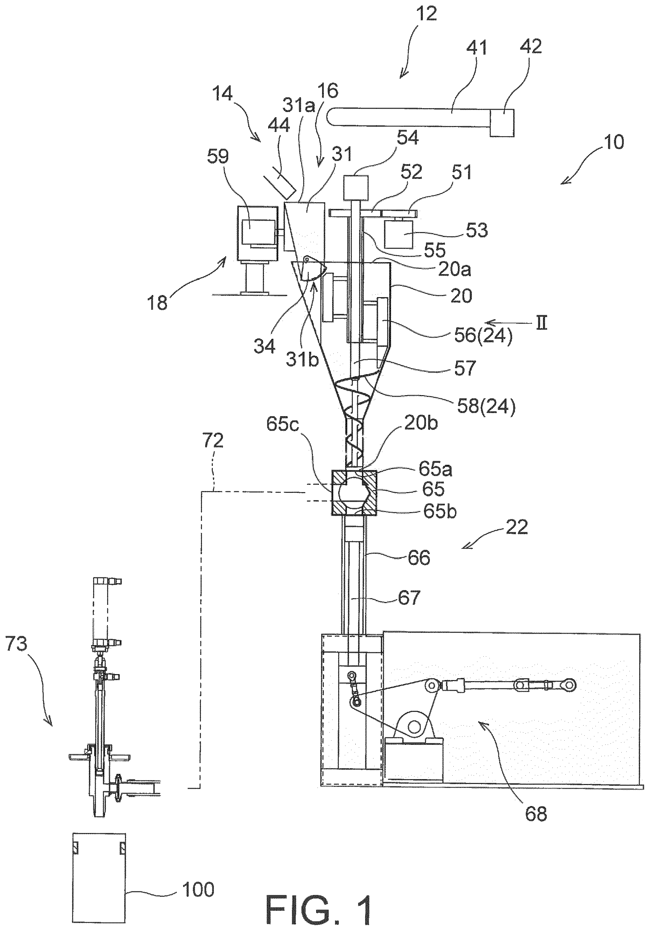

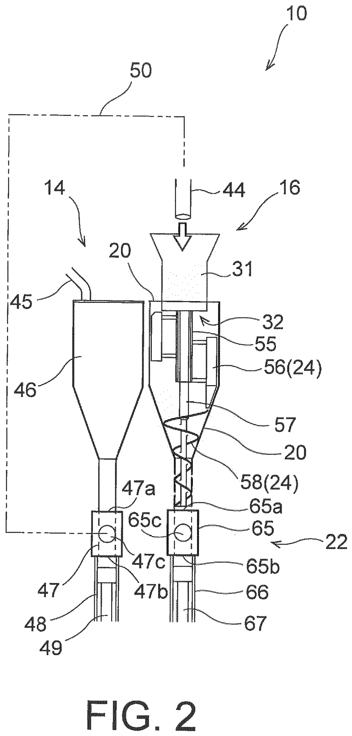

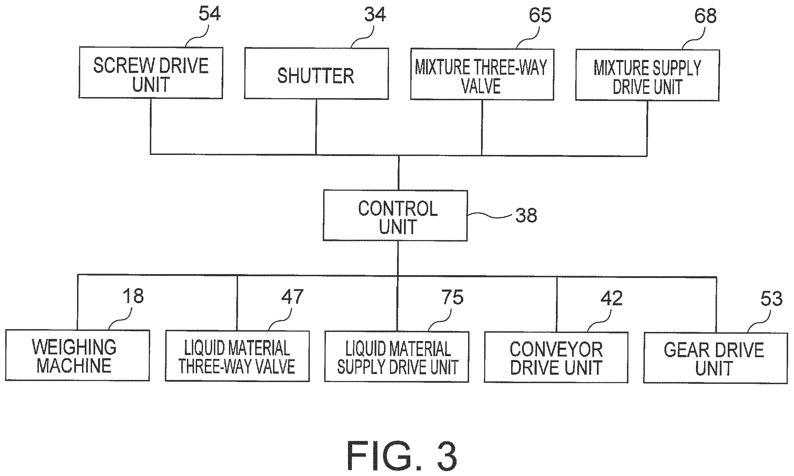

Fig. 1 is a view illustrating the mixture filling apparatus 10 of a first embodiment. Fig. 2 is a view illustrating a part of the mixture filling apparatus 10 as viewed along the arrow "II" in Fig. 1. Fig. 3 is a block diagram illustrating a control system. Incidentally, Figs. 1 and 2 illustrate internal configurations of some elements.

The mixture filling apparatus 10 includes a solid material supply unit 12 that supplies a solid material, a liquid material supply unit 14 that supplies liquid material, a hopper unit 16 that includes a hopper body 31 and a shutter 34, a mixing tank 20 in which the solid material and the liquid material are mixed, a mixture filling unit 22 that introduces a mixture of the solid material and the liquid material stored in the mixing tank 20 into a container 100, and a control unit 38.

The solid material supply unit 12 supplies the solid material to the hopper body 31. The illustrated solid material supply unit 12 includes a conveyor 41 including an endless belt and a conveyor drive unit (for example, servo motor or the like) 42 driving the conveyor 41. The solid material is placed on the conveyor 41, and the solid material is conveyed toward the hopper body 31 by the conveyor 41.

The solid material may be placed on the conveyor 41 by another device, or the solid material may be placed by an operator.

The conveyor 41 of the present embodiment is intermittently moved by the conveyor drive unit 42. A movement amount and/or a movement timing of the conveyor 41 may be determined in advance or may be determined by the operator. For example, the control unit 38 may control the conveyor drive unit 42 to move the conveyor 41 by a predetermined amount at a predetermined timing. In addition, an instruction signal may be sent from an input device (not illustrated) to the control unit 38 as the operator operates an input device, and the control unit 38 may control the conveyor drive unit 42 to drive the conveyor 41 depending on the instruction signal. Therefore, the conveyor 41 may be intermittently driven to travel by a predetermined distance, for example, at a predetermined timing and/or a timing when the operator operates the input device.

In the solid material supply unit 12 having the above-described configuration, weight of the solid material placed on the conveyor 41 is not measured, and it is possible to perform the work of placing the solid material on the conveyor 41 in a casual way. That is, the solid material can be placed on the conveyor 41 basically without considering the weight of the solid material, and it is possible to promptly supply the solid material.

The hopper body 31 of the hopper unit 16 receives the solid material from the solid material supply unit 12, and the solid material stored in the hopper body 31 is dropped toward the inside of the mixing tank 20 as the shutter 34 opens a bottom opening (for example, a release port) 31b of the hopper body 31. A top opening 31a of the hopper body 31 is arranged below a terminal position of the conveyor 41 in the vertical direction. On the other hand, the bottom opening 31b of the hopper body 31 is arranged inside the mixing tank 20 below the top opening 20a of the mixing tank 20, and is arranged above the bottom opening 20b of the mixing tank 20. The illustrated top opening 31a of the hopper body 31 is arranged at a position relatively distant from the conveyor 41 in the vertical direction, but may be provided at a position close to the conveyor 41. In addition, the illustrated bottom opening 31b of the hopper body 31 is arranged inside the mixing tank 20, but may be arranged outside the mixing tank 20. When the bottom opening 31b of the hopper body 31 is arranged outside the mixing tank 20, it is preferable to adjust relative positions between the hopper body 31 and the mixing tank 20 such that the solid material dropped from the inside of the hopper body 31 when the bottom opening 31b is opened by the shutter 34 enters the mixing tank 20.

In this manner, the hopper body 31 is supplied with the solid material from the solid material supply unit 12. Further, the liquid material is also supplied from the liquid material supply unit 14 to the hopper body 31 of the present embodiment. In the illustrated hopper body 31, the solid material dropped from the terminal position of the conveyor 41 enters the inside of the hopper body 31 via the top opening 31a of the hopper body 31. In addition, a discharge port of a liquid material introduction section 44 of the liquid material supply unit 14 is directed to the top opening 31a of the illustrated hopper body 31, and the liquid material discharged from the liquid material introduction section 44 enters the inside of the hopper body 31 via the top opening 31a. In particular, the liquid material introduction section 44 of the present embodiment has the discharge port directed to an inner wall surface of the hopper body 31 and/or the shutter 34, and the liquid material discharged from the liquid material introduction section 44 adheres to the inner wall surface of the hopper body 31 and/or the shutter 34.

The shutter 34 is swingably attached to the hopper body 31, and opens and closes the bottom opening 31b of the hopper body 31 under the control of the control unit 38. The solid material introduced into the hopper body 31 in a state where the bottom opening 31b is closed by the shutter 34 is stored in the hopper body 31. When the bottom opening 31b is opened by the shutter 34, contents in the hopper body 31 drop from the inside of the hopper body 31 via the bottom opening 31b due to the influence of gravity and enter the mixing tank 20.

A weighing machine 18 including a load cell 59 is connected to the hopper body 31.

The weighing machine 18 (for example, the load cell 59) measures weight of the contents stored in the hopper body 31, and transmits the measurement result to the control unit 38. In fact, the weighing machine 18 measures not only the weight of the contents in the hopper body 31 but also each weight of the hopper body 31 and the shutter 34, and it is possible to acquire the weight of the contents in the hopper body 31 by subtracting weight values of the hopper body and the shutter, grasped in advance, from the measured value of the weighing machine 18. Such calculation of the weight may be performed by the weighing machine 18 or by the control unit 38. In either case, the control unit 38 can acquire the weight of the solid material supplied to the hopper body 31 based on a measurement result of the weighing machine 18.

In addition, the control unit 38 of the present embodiment can acquire weight of a solid material newly supplied to the hopper body 31 based on a difference between a value of weight of contents stored in the hopper body 31 measured by the weighing machine 18 before the new solid material is supplied to the hopper body 31 and a value of weight of contents stored in the hopper body 31 measured by the weighing machine 18 after the new solid material has been supplied to the hopper body 31. As a result, for example, even if the solid material remains in the hopper body 31, it is possible to accurately acquire the weight of the solid material newly supplied to the hopper body 31.

The solid material from the solid material supply unit 12 and the liquid material from the liquid material supply unit 14 are stored in the mixing tank 20. At least a part of the mixing tank 20 is arranged below the bottom opening 31b of the hopper body 31 in the vertical direction, and receives the contents discharged from the inside of the hopper body 31 when the bottom opening 31b of the hopper body 31 is opened by the shutter 34. In the present embodiment, both the solid material and the liquid material are supplied to the hopper body 31, and thus, both the solid material and the liquid material are supplied to the mixing tank 20 via the hopper body 31.

The mixing tank 20 is provided with a stirring unit 24 therein. The stirring unit 24 stirs the liquid material and the solid material in the mixing tank 20. The illustrated stirring unit 24 includes a stirring blade 56 and a screw blade 58. The stirring blade 56 is provided mainly to mix the liquid material and the solid material with each other, and can efficiently stir the liquid material and the solid material. On the other hand, the screw blade 58 is provided below the stirring blade 56, and has not only a function of stirring the liquid material and the solid material but also a function of feeding the mixture of the liquid material and the solid material toward the bottom opening 20b of the mixing tank 20.

The stirring blade 56 is fixed to a stirring blade rotation shaft 55, the stirring blade rotation shaft 55 is fixed to a second gear 52, and the second gear 52 is meshed with a first gear 51. The first gear 51 is connected with a gear drive unit 53 (for example, a servo motor), and the gear drive unit 53 is controlled by the control unit 38. As the gear drive unit 53 rotates the first gear 51 under the control of the control unit 38, the second gear 52 and the stirring blade rotation shaft 55 can be rotated, and the stirring blade 56 fixed to the stirring blade rotation shaft 55 can also be rotated. In this manner, the rotation of the stirring blade 56 is adjusted by the gear drive unit 53 under the control of the control unit 38.

The screw blade 58 is fixed to a screw rotation shaft 57, the screw rotation shaft 57 is connected to a screw drive unit 54 (for example, a servo motor), and the screw drive unit 54 is controlled by the control unit 38. As the screw drive unit 54 rotates the screw rotation shaft 57 under the control of the control unit 38, the screw blade 58 can be rotated. In this manner, the rotation of the screw blade 58 is adjusted by the screw drive unit 54 under the control of the control unit 38. Incidentally, the screw blade 58 serves mainly to feed the mixture from the mixing tank 20 toward a mixture three-way valve 65 as described above, and a feeding quantity of the mixture is adjusted depending on a rotation amount of the screw blade 58. Therefore, the control unit 38 can change the quantity and speed of the mixture to be fed from the mixing tank 20 toward the mixture three-way valve 65 by controlling the screw drive unit 54 to adjust the rotation amount of the screw blade 58.

The mixture filling unit 22 introduces the mixture of the solid material and the liquid material stored in the mixing tank 20 into the container 100. More particularly, the mixture filling unit 22 takes out a predetermined quantity of the mixture from the mixing tank 20 and supplies the taken-out mixture to the container 100 under the control of the control unit 38.

The mixture filling unit 22 of the present embodiment has the mixture three-way valve 65, a mixture cylinder 66, a mixture piston 67, a mixture supply drive unit 68, a mixture conveyance path 72, and a filling nozzle 73.

The mixture three-way valve 65 has a tank communicating port 65a, an introduction section communicating port 65b, and a conveyance path communicating port 65c that communicate with each other, communicates with the mixing tank 20 (particularly the bottom opening 20b) via the tank communicating port 65a, communicates with the mixture piston 67 via the introduction section communicating port 65b, and communicates with the mixture conveyance path 72 via the conveyance path communicating port 65c. These communicating ports 65a, 65b, and 65c are provided so as to be openable and closable under the control of the control unit 38. For example, the mixture three-way valve 65 can be set to a first opening/closing mode of closing the conveyance path communicating port 65c while opening the tank communicating port 65a and the introduction section communicating port 65b and a second opening/closing mode of closing the tank communicating port 65a while opening the introduction section communicating port 65b and the conveyance path communicating port 65c.

The mixture supply drive unit 68 can employ any mechanism capable of adjusting an arrangement position of the mixture piston 67 in the mixture cylinder 66. In the illustrated mixture supply drive unit 68, a link connected to a rotation shaft of a servo motor or the like is connected to an oscillating body which is provided swingably with respect to the mixture piston 67, and a position of the mixture piston 67 in the mixture cylinder 66 is determined in accordance with a rotational position (that is, a rotational angle) of the rotary shaft. Therefore, the control unit 38 can arrange the mixture piston 67 at an arbitrary position in the mixture cylinder 66 by controlling the mixture supply drive unit 68 (particularly, the rotational angle of the rotary shaft).

When the mixture is taken out of the mixing tank 20, the mixture three-way valve 65 is set to the first opening/closing mode, the conveyance path communicating port 65c is closed, and the mixing tank 20 and the mixture cylinder 66 communicate with each other via the tank communicating port 65a and the introduction section communicating port 65b. In addition, the mixture supply drive unit 68 adjusts the position of the mixture piston 67 under the control of the control unit 38, and a space corresponding to a take-out quantity of the mixture is formed above the mixture piston 67 in the mixture cylinder 66. In this state, the screw drive unit 54 rotates the screw blade 58 to feed the mixture in the mixing tank 20 toward the mixture three-way valve 65 and the mixture piston 67 from the bottom opening 20b so that the space above the mixture piston 67 in the mixture cylinder 66 is filled with the mixture. In this manner, a desired quantity of the mixture is taken out of the mixing tank 20.

When introducing the mixture taken out in this manner into the container 100, the mixture three-way valve 65 is set to the second opening/closing mode, the tank communicating port 65a is closed, and the mixture cylinder 66 and the mixture conveyance path 72 communicate with each other via the introduction section communicating port 65b and the conveyance path communicating port 65c. In this state, the mixture supply drive unit 68 adjusts the position of the mixture piston 67, and the mixture above the mixture piston 67 in the mixture cylinder 66 is pushed toward the mixture three-way valve 65. The mixture pushed from the inside of the mixture cylinder 66 by the mixture piston 67 to the mixture three-way valve 65 is sent to the filling nozzle 73 via the conveyance path communicating port 65c and the mixture conveyance path 72, and is introduced into the container 100 from the filling nozzle 73.

Incidentally, the filling nozzle 73 has any configuration capable of introducing the mixture sent through the mixture conveyance path 72 into the container 100. Therefore, the filling nozzle 73 may have a mechanism such as a piston that can positively push the mixture that has been sent from the mixture conveyance path 72 toward the container 100. That is, the filling nozzle 73 itself may have the mechanism for positively discharging the mixture, or the mixture may be discharged on the basis of only a supply pressure of the mixture without providing such a mechanism for positively discharging the mixture.

The liquid material supply unit 14 supplies the liquid material, an amount of which is determined based on the weight of the solid material supplied to the hopper body 31 acquired by the control unit 38. The liquid material supply unit 14 of the present embodiment supplies the liquid material into the hopper body 31 via the liquid material introduction section 44. In the liquid material supply unit 14 illustrated in Fig. 2, the liquid material is supplied from a liquid supply source (not illustrated) to a liquid material storage tank 46 via a liquid material supply path 45, and a large amount of liquid material can be stored in the liquid material storage tank 46. A liquid material conveyance section 50 is connected to the liquid material storage tank 46 via a liquid material three-way valve 47, and the liquid material introduction section 44 is connected to the liquid material conveyance section 50.

A liquid material cylinder 48 is connected to the liquid material three-way valve 47, and taking the liquid material out of the liquid material storage tank 46 and feeding the taken-out liquid material to the liquid material introduction section 44 are performed in accordance with advancing and retreating operations of a liquid material piston 49 in the liquid material cylinder 48. These taking-out and feeding of the liquid material are performed in the same manner as the taking-out and feeding of the mixture which are performed by the mixture three-way valve 65, the mixture cylinder 66, the mixture piston 67, and the mixture supply drive unit 68 described above. That is, a liquid material supply drive unit 75 (see Fig. 3) that adjusts advancing and retreating positions of the liquid material piston 49 is provided, and the advancing and retreating operations of the liquid material piston 49 by the liquid material supply drive unit 75 and opening and closing operations of communicating ports 47a, 47b, and 47c of the liquid material three-way valve 47 are interlocked with each other under the control of the control unit 38.

For example, when the liquid material is taken out of the liquid material storage tank 46, the tank communicating port 47a and the cylinder communicating port 47b of the liquid material three-way valve 47 are opened by the control unit 38, and the conveyance path communicating port 47c is closed. As a result, the liquid material storage tank 46 and the liquid material cylinder 48 communicate with each other via the tank communicating port 47a and the cylinder communicating port 47b. In addition, the liquid material supply drive unit 75 adjusts a position of the liquid material piston 49 under the control of the control of the control unit 38, a space corresponding to a take-out amount of the liquid material is formed above the liquid material piston 49 in the liquid material cylinder 48. In this manner, the space above the liquid material piston 49 in the liquid material cylinder 48 is filled with the liquid material from the liquid material storage tank 46, and a desired amount of the liquid material is taken out of the liquid material storage tank 46. Incidentally, the amount of the liquid material taken out of the liquid material storage tank 46 is determined depending on the "weight of the solid material introduced into the hopper body 31" obtained based on the measurement result of the weighing machine 18 as described above.

When discharging the liquid material taken out in this manner from the liquid material introduction section 44, the cylinder communicating port 47b and the conveyance path communicating port 47c of the liquid material three-way valve 47 are opened and the tank communicating port 47a is closed, whereby the liquid material cylinder 48 and the liquid material conveyance section 50 communicate with each other. In this state, the liquid material supply drive unit 75 adjusts the position of the liquid material piston 49, and the liquid material above the liquid material piston 49 in the liquid material cylinder 48 is pushed toward the liquid material three-way valve 47. The liquid material pushed from the liquid material cylinder48 to the liquid material three-way valve 47 is sent to the liquid material introduction section 44 via the conveyance path communicating port 47c and the liquid material conveyance section 50, and is discharged into the hopper body 31 from the liquid material introduction section 44.

As described above, the control unit 38 illustrated in Fig. 3 is connected to the weighing machine 18 (load cell 59), the liquid material three-way valve 47, the liquid material supply drive unit 75, the conveyor drive unit 42, the gear drive unit 53, the screw drive unit 54, the shutter 34, the mixture three-way valve 65, the mixture supply drive unit 68, and the like, and controls the respective elements.

In particular, the control unit 38 acquires the weight of the solid material supplied to the hopper body 31 based on the measurement result of the weighing machine 18, and acquires (calculates) the optimum amount of the liquid material determined in advance depending on the weight of the solid material. Further, the control unit 38 controls the liquid material supply unit 14 (particularly the liquid material three-way valve 47 and the liquid material supply drive unit 75) such that the optimum amount of the liquid material is supplied to the hopper body 31 via the liquid material introduction section 44.

In addition, the control unit 38 of the present embodiment controls the liquid material supply unit 14 and the shutter 34 so as to supply the liquid material from the liquid material supply unit 14 (particularly the liquid material introduction section 44) into the hopper body 31 such that the liquid material adheres to at least one of the hopper body 31 and the shutter 34. More specifically, a direction of the discharge port of the liquid material introduction section 44 is defined in order to wash out the solid material adhered to the hopper body 31 and the shutter 34 with the liquid material. In addition, the liquid material supply unit 14 supplies the liquid material into the hopper body 31 after the solid material is supplied from the solid material supply unit 12 to the hopper body 31, the weighing machine 18 measures the weight of the content stored in the hopper body 31, and the bottom opening 31b is opened by the shutter 34. As a result, the liquid material is supplied into the hopper body 31 after the solid material drops from the inside of the hopper body 31, and thus, it is possible to efficiently cause the liquid material to adhere to the hopper body 31 and the shutter 34. Incidentally, the bottom opening 31b of the hopper body 31 may be closed by the shutter 34 or be opened while the liquid material is being discharged from the liquid material supply unit 14 (that is, the liquid material introduction section 44) into the hopper body 31.

In addition, the control unit 38 controls the screw drive unit 54, the mixture three-way valve 65, and the mixture supply drive unit 68 to take the desired amount of the mixture out of the mixing tank 20 and to introduce the desired amount of the mixture into the container 100 through the mixture three-way valve 65, the mixture conveyance path 72, and the filling nozzle 73.

Incidentally, the control unit 38 is indicated by a single block in Fig. 3, but the control unit 38 may be configured using a single device or configured using a plurality of devices separated from each other.

Next, an operation of the mixture filling apparatus 10 of the present embodiment will be described. The operation of the mixture filling apparatus 10 to be described hereinafter is performed as the control unit 38 controls each operation of various elements.

First, the conveyor 41 is driven by the conveyor drive unit 42, and the solid material is supplied to the hopper body 31 by the conveyor 41. At this time, sizes of the solid materials to be placed on the conveyor 41 vary, and a supply quantity of the solid material from the conveyor 41 into the hopper body 31 is not always constant. While a mixture of the solid materials is being supplied from the conveyor 41 to the hopper body 31, the bottom opening 31b of the hopper body 31 is closed by the shutter 34, and the solid materials supplied into the hopper body 31 are stored in the hopper body 31.

After the solid materials are supplied from the transport conveyor 41 into the hopper body 31 to some extent, the conveyor drive unit 42 stops the conveyor 41, and the supply of the solid material from the conveyor 41 to the inside of the hopper body 31 is also stopped. A timing at which the conveyor 41 is stopped may be determined based on a predetermined time, may be determined based on a predetermined traveling distance of the conveyor 41, may be determined by the operator using the input device (not illustrated), or may be determined by the control unit 38 based on a measured value of the weighing machine 18.

While the supply of the solid material from the conveyor 41 to the inside of the hopper body 31 is stopped, weight of contents in the hopper body 31 is measured by the weighing machine 18. The measurement of the weighing machine 18 may be performed even while the conveyor 41 is moving (that is, while the solid material is being supplied from the conveyor 41 to the inside of the hopper body 31) or performed only while the conveyor 41 is being stopped (that is, while the supply of the solid material from the conveyor 41 into the hopper body 31 is being stopped).

The control unit 38 acquires weight of a solid material newly introduced into the hopper body 31 and calculates the optimum amount of the liquid material based on the weight of the solid material. That is, the control unit 38 acquires the amount of the liquid material so as to set a blending ratio of the solid material and the liquid material to a predetermined ratio.

After the measurement by the weighing machine 18 is completed, the bottom opening 31b of the hopper body 31 is opened by the shutter 34, and the solid material in the hopper body 31 is dropped into the mixing tank 20. Then, the liquid material is discharged from the liquid material supply unit 14 (particularly the liquid material introduction section 44) toward the inner wall surface of the hopper body 31 and/or the shutter 34, and the solid material adhered to the inner wall surface of the hopper body 31 and/or the shutter 34 is washed off with the liquid material.

After the liquid material drops from the hopper body 31 into the mixing tank 20 in a state where the bottom opening 31b of the hopper body 31 is opened by the shutter 34, the bottom opening 31b is closed again by the shutter 34. Incidentally, the re-closing of the bottom opening 31b is performed before a new solid material is supplied into the hopper body 31 accompanying the next movement of the conveyor 41.

The above-described series of operations including the measurement by the weighing machine 18, the drop of the solid material from the hopper body 31, the drop of the liquid material from the hopper body 31, and the re-closing of the bottom opening 31b of the hopper body 31 is executed each time "movement and stop" of the conveyor 41 are performed once, and the mixing of the liquid material and the solid material in the mixing tank 20 and the process of introducing the mixture from the mixing tank 20 to the container 100 basically can be performed independently. Thus, the hopper body 31 can supply an arbitrary quantity of the solid material (and the liquid material) into the mixing tank 20 at an arbitrary timing in a range where the liquid material and the solid material do not overflow from the mixing tank 20.

The stirring blade 56 is rotated in the mixing tank 20 to promote the mixing of the liquid material and the solid material in the mixing tank 20.

In addition, the mixture three-way valve 65 is controlled by the control unit 38, the tank communicating port 65a and the introduction section communicating port 65b are opened while the conveyance path communicating port 65c is closed, and the mixing tank 20 of the mixture three-way valve 65 and the mixture cylinder 66 communicate with each other via the mixture three-way valve 65. Then, the screw blade 58 is rotated to feed the mixture toward the mixture three-way valve 65 and the mixture cylinder 66 while lowering the mixture piston 67 to draw the mixture into the mixture cylinder 66.

Then, a communicating state of the mixture three-way valve 65 is switched, the introduction section communicating port 65b and the conveyance path communicating port 65c are opened while the tank communicating port 65a is closed so that the mixture cylinder 66 and the mixture conveyance path 72 communicate with each other via the mixture three-way valve 65. Then, the mixture piston 67 is raised to push the mixture in the mixture cylinder 66 toward the mixture three-way valve 65, whereby the mixture is supplied to the filling nozzle 73 via the mixture conveyance path 72. Then, the mixture is introduced into the container 100 from the filling nozzle 73.

As described above, the mixture filling apparatus 10 of the present embodiment includes: the solid material supply unit 12 that supplies the solid material; the liquid material supply unit 14 that supplies the liquid material; the hopper unit 16 that is capable of storing and releasing the solid material supplied from the solid material supply unit 12 and includes the hopper body 31 and the shutter 34 to open and close the release port (bottom opening 31b) of the hopper body 31; the weighing machine 18 that is connected to the hopper unit 16 and measures the weight of the solid material stored in the hopper unit 16; the mixing tank 20 that stores the solid material supplied from the solid material supply unit 12 via the hopper unit 16 and the liquid material supplied from the liquid material supply unit 14 and receives the solid material released from the hopper unit 16 when the release port of the hopper body 31 is opened by the shutter 34; the mixture filling unit 22 that fills the container 100 with the mixture of the solid material and the liquid material stored in the mixing tank 20; and the control unit 38 that is connected to the weighing machine 18 and the liquid material supply unit 14, in which the control unit 38 controls the liquid material supply unit 14 to adjust the amount of the liquid material to be supplied from the liquid material supply unit 14 based on the measurement result of the weighing machine 18.

In particular, the liquid material supply unit 14 includes the discharge port to discharge the liquid material toward the inside of the hopper unit 16. The discharge port of the liquid material supply unit 14 is arranged to face toward at least one of the inner surface of the hopper body 31 and the inner surface of the shutter 34. In addition, the liquid material supply unit 14 discharges the liquid material from the discharge port of the liquid material supply unit 14 after the solid material is supplied from the solid material supply unit 12 into the hopper unit 16, the weighing machine 18 measures the weight of the solid material stored in the hopper unit 16, and the release port of the hopper body 31 is opened by the shutter 34. In addition, the control unit 38 acquires weight of a solid material supplied into the hopper unit 16 based on a difference between a value of weight of a solid material adhered to and remaining in the hopper unit 16 measured by the weighing machine 18 before the solid material is supplied to the hopper unit 16 and a value of weight of a solid material stored in the hopper unit 16 measured by the weighing machine 18 after the solid material has been supplied to the hopper unit 16.

In addition, the mixture filling method includes: a solid material supply step of supplying a solid material to a hopper unit 16 capable of storing and releasing the solid material; a weight measurement step of measuring weight of the solid material stored in the hopper unit 16 after the solid material supply step; a solid material release step of releasing the solid material in the hopper unit 16 into a mixing tank 20 after the weight measurement step; a liquid material supply amount determination step of determining an amount of liquid material to be supplied into the mixing tank 20 using a value of an optimum supply amount of the liquid material set in advance in accordance with a value of the weight of the solid material based on a measurement result in the weight measurement step, after the weight measurement step; a liquid material supply step of supplying the determined amount of the liquid material from a liquid material supply unit 14 into the mixing tank 20 after the liquid material supply amount determination step; a mixing step of storing the solid material and the liquid material supplied into the mixing tank 20 in the solid material release step and the liquid material supply step in the mixing tank 20 and mixing the stored solid material and liquid material inside the mixing tank 20; and a mixture filling step of filling a container 100 with the solid material and the liquid material in the mixing tank 20 mixed in the mixing step.

In particular, in the liquid material supply step, the liquid material is supplied toward the inner surface of the hopper unit 16, and the solid material adhered to the inner surface of the hopper unit 16 flows down due to the supplied liquid material and to be supplied into the mixing tank 20 together with the liquid material.

As described above, it is possible to mix the liquid material and the solid material at the appropriate ratio and to perform the process of introducing the mixture into the container 100 at high speed so that it is possible to improve the productivity according to the present embodiment.

That is, since the supply amount of the liquid material is determined depending on the weight of the solid material that has been introduced into the hopper body 31, the liquid material and the solid material can be mixed at the desired ratio.

In addition, a place (that is, the mixing tank 20) to perform mixing of the liquid material and the solid material and a place (that is, the hopper body 31) to measure the weight of the solid material are separated from each other, and thus, it is possible to perform mixing of the liquid material and the solid material and feeding of the mixture while the weight measurement of the solid material is being performed. As a result, it is unnecessary to stop mixing of the liquid material and the solid material and feeding of the mixture at the time of measuring the weight of the solid material, and it is possible to perform the measurement of the weight of the solid material, and mixing of the liquid material and the solid material and feeding of the mixture in parallel.

In addition, the solid material adhered to the hopper body 31 and the shutter 34 can be washed off with the liquid material by discharging the liquid material toward the inner wall surface of the hopper body 31 and/or the shutter 34. As a result, it is possible to suppress occurrence of an error in the measurement of weight of a solid material to be introduced into the hopper body 31 next, and further, it is possible to send each appropriate amount of the solid material and the liquid material into the mixing tank 20.

In addition, it is possible to promote mixing of the liquid material and the solid material by providing the stirring unit 24 in the mixing tank 20, and to prevent the liquid material and the solid material from being introduced into the container 100 in the state of being separated from each other.

In addition, since the mixture is positively pushed toward the container 100 by the mixture filling unit 22 in the present embodiment, it is possible to shorten the time required for introduction as compared to a case where a solid material and liquid material (or a mixture of the solid material and the liquid material) are dropped naturally and introduced into the container 100.

### [Second Example]

In the present example, the same or similar configurations as those of the above-described first embodiment will be denoted by the same reference signs, and the detailed description thereof will be omitted.

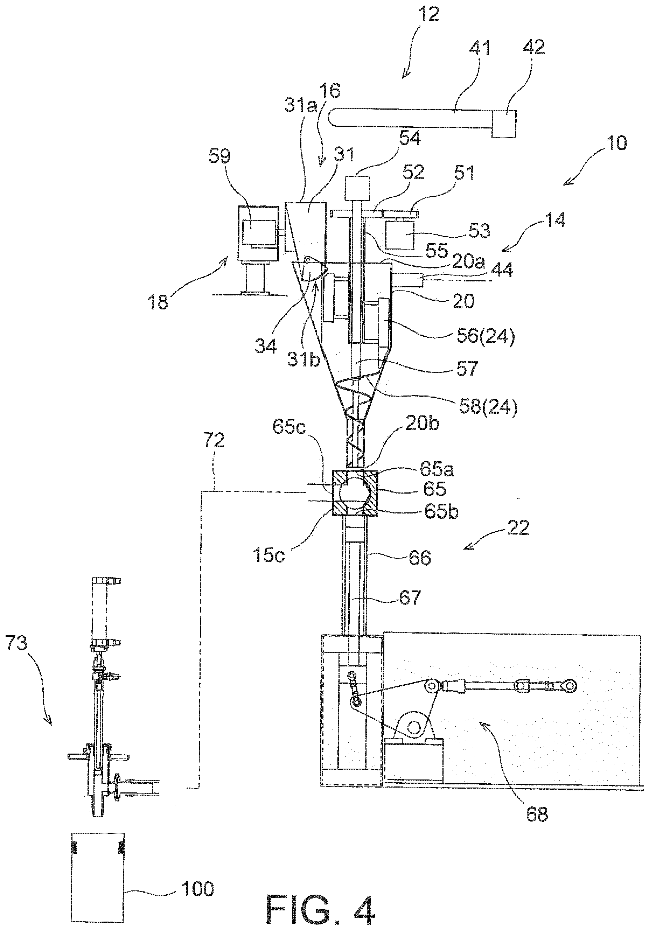

Fig. 4 is a view illustrating a mixture filling apparatus 10 of the second example. Incidentally, a liquid material supply unit 14 is not illustrated in Fig. 4, the liquid material supply unit 14 of the present example basically has the same configuration as the liquid material supply unit 14 of the first embodiment illustrated in Fig. 2.

Although the liquid material supply unit 14 of the present example has the same configuration as the liquid material supply unit 14 (see Figs. 1 and 2) of the above-described first embodiment, a liquid material introduction section 44 is connected to an inside of a mixing tank 20. That is, the liquid material supply unit 14 directly supplies liquid material to the mixing tank 20 without passing through a hopper body 31.

As described above, the liquid material supply unit 14 of the present example includes a discharge port to discharge the liquid material toward the inside of the mixing tank 20.

Other configurations are the same as those of the mixture filling apparatus 10 of the above-described first embodiment.

According to the present example, an optimum amount of the liquid material corresponding to weight of a solid material introduced from a conveyor 41 into the hopper body 31 is supplied into the mixing tank 20. As a result, it is possible to reduce a drop of the liquid material in the mixing tank 20 and to prevent unnecessary foaming and scattering of the liquid material. In addition, since the liquid material can be supplied to the mixing tank 20 without causing the liquid material to adhere to the hopper body 31 and a shutter 34, the mixture filling apparatus 10 of the present example is advantageous in a case where a problem may occur due to adhesion of the liquid material to the hopper body 31 and the shutter 34.

The present invention is not limited to the above-described embodiment and modifications. For example, various modifications may be made to the respective elements of the embodiment and the modifications described above. Further, aspects including components and/or methods other than the above-described components and/or methods may also be included in embodiments of the present invention. Further, aspects in which some of the above-described components and/or methods are not included may also be included in embodiments of the present invention. Further, aspects including some components and/or methods included in an embodiment of the present invention and some components and/or methods included in another embodiment of the present invention may also be included in embodiments of the present invention. Therefore, components and/or methods included in each of the above-described embodiments and modifications and embodiments of the present invention other than those described above may be combined, and aspects according to such combinations may also be included in embodiments of the present invention. Further, the effects exerted by the present invention are not limited to the above-described effects, and specific effects according to the specific configuration of each embodiment can be exerted. In this manner, various additions, modifications, and partial deletions can be made to the respective elements described in the claims, the specification, the abstract, and the drawings without departing from the invention as defined in the claims.

For example, the bottom opening 31b (release port) of the hopper body 31 is opened and closed by the shutter 34 in the above embodiments and modifications, but a scheme of storing and discharging contents such as the solid material in the hopper body 31 is not limited thereto. For example, a bottom of the hopper body 31 may have no opening, a notch (not illustrated) functioning as the release port may be provided on a side wall of the hopper body 31, and the entire hopper body 31 may be rotatably provided. In this case, for example, a solid material is input in the hopper body 31 in a state where the bottom of the hopper body 31 is arranged on a lower side in the vertical direction when storing the solid material in the hopper body 31, and the hopper body 31 is rotated to direct the notch to the lower side in the vertical direction when releasing the solid material from the hopper body 31 under the control of the control unit 38, whereby it is also possible to release the solid material from the hopper body 31 into the mixing tank 20 via the notch.

## Claims

1. A mixture filling apparatus (10) comprising:
a solid material supply unit (12) that supplies a solid material;
a liquid material supply unit (14) that supplies liquid material;
a hopper unit (16) that is capable of storing and releasing the solid material supplied from the solid material supply unit (12) and includes a hopper body (31) and a shutter (34) to open and close a release port (31b) of the hopper body (31);
a weighing machine (18) that is connected to the hopper unit (16) and is configured to measure weight of the solid material stored in the hopper unit (16);
a mixing tank (20) that is configured to store the solid material supplied from the solid material supply unit (12) via the hopper unit (16) and the liquid material supplied from the liquid material supply unit (14), and receives the solid material released from the hopper unit (16) when the release port (31b) of the hopper body (31) is opened by the shutter (34);
a mixture filling unit (22) that is configured to fill a container (100) with a mixture of the solid material and the liquid material stored in the mixing tank (20); and
a control unit (38) that is connected to the weighing machine (18) and the liquid material supply unit (14),
wherein the control unit (38) is configured to control the liquid material supply unit (14) to adjust an amount of the liquid material to be supplied from the liquid material supply unit (14) according to a measurement result of the weighing machine (18),
wherein the liquid material supply unit (14) includes a discharge port to discharge the liquid material toward an inside of the hopper unit (16),
wherein the discharge port is arranged to face toward at least one of an inner surface of the hopper body (31) and an inner surface of the shutter (34), and
wherein the control unit (38) is configured to control the liquid material supply unit (14) to discharge the liquid material from the discharge port after the solid material is supplied into the hopper unit (16) from the solid material supply unit (12), the release port (31b) of the hopper body (31) is opened by the shutter (34) and the solid material enters the mixing tank (20) from the inside of the hopper body (31) via the release port (31b).

2. The mixture filling apparatus (10) as defined in claim 1, wherein the control unit (38) is configured to control the liquid material supply unit (14) to discharge the liquid material from the discharge port after the weighing machine (18) measures the weight of the solid material stored in the hopper unit (16), and the release port (31b) of the hopper body (31) is opened by the shutter (34).

3. The mixture filling apparatus (10) as defined in claim 1 or 2, further comprising a stirring unit (24) that is configured to stir the liquid material and the solid material in the mixing tank (20).

4. The mixture filling apparatus (10) as defined in any one of claims 1 to 3, wherein the control unit (38) is configured to acquire the weight of the solid material supplied into the hopper unit (16) according to a difference between a value of weight of the solid material adhered to and remaining in the hopper unit (16) measured by the weighing machine (18) before the solid material is supplied into the hopper unit (16), and a value of weight of the solid material in the hopper unit (16) measured by the weighing machine (18) after the solid material has been supplied into the hopper unit (16).

5. The mixture filling apparatus (10) as defined in any one of claims 1 to 4, wherein the release port (31b) of the hopper body (31) is opened by the shutter (34) while the liquid material is being discharged from the discharge port of the liquid material supply unit (14).

6. A mixture filling method comprising:
a solid material supply step of supplying a solid material to a hopper unit (16) capable of storing and releasing the solid material;
a weight measurement step of measuring weight of the solid material stored in the hopper unit (16) after the solid material supply step;
a solid material release step of releasing the solid material in the hopper unit (16) into a mixing tank (20) after the weight measurement step;
a liquid material supply amount determination step of determining an amount of a liquid material to be supplied into the mixing tank (20) using a value of an optimum supply amount of the liquid material set in advance based on a value of the weight of the solid material according to a measurement result in the weight measurement step, after the weight measurement step;
a liquid material supply step of supplying the determined amount of the liquid material from a liquid material supply unit (14) to the hopper unit (16) and therefrom into the mixing tank (20) after the liquid material supply amount determination step and after the solid material release step;
a mixing step of storing in the mixing tank (20) the solid material and the liquid material supplied into the mixing tank (20) in the solid material release step and the liquid material supply step and mixing the solid material and the liquid material which are stored inside the mixing tank (20); and
a mixture filling step of filling a container (100) with the solid material and the liquid material in the mixing tank (20) mixed in the mixing step.

7. The mixture filling method as defined in claim 6, wherein in the liquid material supply step, the liquid material is supplied toward an inner surface of the hopper unit (16) in such a manner that the solid material adhered to the inner surface of the hopper unit (16) flows down due to the supplied liquid material and is supplied into the mixing tank (20) together with the liquid material.

## Patentansprüche

1. Eine Gemischfüllvorrichtung (10), umfassend:
eine Festmaterialversorgungseinheit (12), die ein Festmaterial bereitstellt;
eine Flüssigmateriaversorgungseinheit (14), die Flüssigmaterial bereitstellt;
eine Trichtereinheit (16), die in der Lage ist, das von der Festmaterialversorgungseinheit (12) bereitgestellte Festmaterial zu speichern und freizugeben, und die einen Trichterkörper (31) und einen Verschluss (34) zum Öffnen und Schließen einer Freigabeöffnung (31b) des Trichterkörpers (31) enthält;
eine Waage (18), die mit der Trichtereinheit (16) verbunden ist und so konfiguriert ist, das Gewicht des in der Trichtereinheit (16) gespeicherten Festmaterials zu messen;
einen Mischtank (20), der so konfiguriert ist, das von der Festmaterialversorgungseinheit (12) über die Trichtereinheit (16) bereitgestellte Festmaterial und das von der Flüssigmaterialversorgungseinheit (14) bereitgestellte Flüssigmaterial zu speichern, und der das von der Trichtereinheit (16) freigegebene Festmaterial empfängt, wenn die Freigabeöffnung (31b) des Trichterkörpers (31) durch den Verschluss (34) geöffnet wird;
eine Gemischfülleinheit (22), die so konfiguriert ist, einen Behälter (100) mit einem Gemisch aus dem Festmaterial und dem Flüssigmaterial zu füllen, das in dem Mischtank (20) gespeichert ist; und
eine Steuereinheit (38), die mit der Waage (18) und der Flüssigmaterialversorgungseinheit (14) verbunden ist,
wobei die Steuereinheit (38) so konfiguriert ist, die Flüssigmaterialversorgungseinheit (14) zu steuern, eine Menge des von der Flüssigmaterialversorgungseinheit (14) bereitzustellenden Flüssigmaterials entsprechend einem Messergebnis der Waage (18) einzustellen,
wobei die Flüssigmaterialversorgungseinheit (14) eine Auslassöffnung zum Auslassen des Flüssigmaterials zum Inneren der Trichtereinheit (16) aufweist,
wobei die Auslassöffnung so angeordnet ist, In Richtung von zumindest einer von einer Innenfläche des Trichterkörpers (31) und einer Innenfläche des Verschlusses (34) zugewandt ist, und
wobei die Steuereinheit (38) konfiguriert ist, die Flüssigmaterialversorgungseinheit (14) so zu steuern, das Flüssigmaterial aus der Auslassöffnung auszulassen, nachdem das Festmaterial von der Festmaterialversorgungseinheit (12) in die Trichtereinheit (16) bereitgestellt ist, die Freigabeöffnung (31b) des Trichterkörpers (31) durch den Verschluss (34) geöffnet ist und das Festmaterial vom Inneren des Trichterkörpers (31) über die Freigabeöffnung (31b) in den Mischtank (20) eintritt.

2. Die Gemischfüllvorrichtung (10), wie in Anspruch 1 definiert, wobei die Steuereinheit (38) konfiguriert ist, die Flüssigmaterialversorgungseinheit (14) zu steuern, das Flüssigmaterial aus der Auslassöffnung auszulassen, nachdem die Wiegemaschine (18) das Gewicht des in der Trichtereinheit (16) gespeicherten Festmaterials misst, und die Freigabeöffnung (31b) des Trichterkörpers (31) durch den Verschluss (34) geöffnet ist.

3. Die Gemischfüllvorrichtung (10), wie in Anspruch 1 oder 2 definiert, ferner umfassend eine Rühreinheit (24), die konfiguriert ist, das Flüssigmaterial und das Festmaterial in dem Mischtank (20) zu rühren.

4. Die Gemischfüllvorrichtung (10), wie in irgendeinem der Ansprüche 1 bis 3 definiert, wobei die Steuereinheit (38) konfiguriert ist, das Gewicht des in die Trichtereinheit (16) bereitgestellten Festmaterials gemäß einer Differenz zwischen einem von der Waage (18), bevor das Festmaterial in die Trichtereinheit (16) bereitgestellt wird, gemessenen Gewichtswert des an der Trichtereinheit (16) anhaftenden und darin verbleibenden Festmaterials, und einem, nachdem das Festmaterial in die Trichtereinheit (16) bereitgestellt wurde, gemessenen Gewichtswert des Festmaterials in der Trichtereinheit (16).

5. Die Gemischfüllvorrichtung (10), wie in irgendeinem der Ansprüche 1 bis 4 definiert, wobei die Freigabeöffnung (31b) des Trichterkörpers (31) durch den Verschluss (34) geöffnet wird, während das Flüssigmaterial aus der Auslassöffnung der Flüssigmaterialversorgungseinheit (14) ausgelassen wird.

6. Ein Gemischfüllverfahren, umfassend:
einen Festmaterialversorgungsschritt des Bereitstellens eines Festmaterials an eine Trichtereinheit (16), die in der Lage ist, das Festmaterial zu speichern und freizugeben;
einen Gewichtsmessschritt des Messens des Gewichts des in der Trichtereinheit (16) gespeicherten Festmaterials nach dem Festmaterialversorgungsschritt;
einen Festmaterialfreigabeschritt des Freigebens des Festmaterials in der Trichtereinheit (16) in einen Mischtank (20) nach dem Gewichtsmessschritt;
einen Flüssigmaterialversorgungsmengenbestimmungsschritt des Bestimmens einer Menge eines Flüssigmaterials, das in den Mischtank (20) bereitzustellen ist, unter Verwendung eines Wertes einer optimalen Versorgungsmenge des Flüssigmaterials, die im Voraus auf der Grundlage eines Wertes des Gewichts des Festmaterials gemäß einem Messergebnis in dem Gewichtsmessschritt festgelegt wird, nach dem Gewichtsmessschritt;
einen Flüssigmaterialversorgungsschritt des Bereitstellens der bestimmten Menge des Flüssigmaterials von einer Flüssigmaterialversorgungseinheit (14) zu der Trichtereinheit (16) und von dort in den Mischtank (20) nach dem Flüssigmaterialversorgungsmengenbestimmungsschritt und nach dem Festmaterialfreigabeschritt;
einen Mischschritt des Speicherns des Festmaterials und des Flüssigmaterials, die in den Mischtank (20) in dem Feststofffreigabeschritt und dem Flüssigmaterialversorgungsschritt bereitgestellt werden, in dem Mischtank (20) und des Mischens des Festmaterials und des Flüssigmaterials, die in dem Mischtank (20) gespeichert sind; und
einen Gemischfüllschritt des Füllens eines Behälters (100) mit dem Festmaterial und dem Flüssigmaterial in dem Mischtank (20), die in dem Mischschritt gemischt werden.

7. Das Gemischfüllverfahren, wie in Anspruch 6 definiert, wobei in dem Flüssigmaterialversorgungsschritt das Flüssigmaterial in Richtung einer Innenfläche der Trichtereinheit (16) in einer solchen Weise bereitgestellt wird, dass das an der Innenfläche der Trichtereinheit (16) anhaftende Festmaterial aufgrund des bereitgestellten Flüssigmaterials nach unten fließt und zusammen mit dem Flüssigmaterial in den Mischtank (20) bereitgestellt wird.

## Revendications

1. Appareil de remplissage de mélange (10) comprenant :
une unité d'apport de matière solide (12) qui apporte une matière solide ;
une unité d'apport de matière liquide (14) qui apporte une matière liquide ;
une unité de trémie (16) qui est capable de stocker et de libérer la matière solide apportée depuis l'unité d'apport de matière solide (12) et comporte un corps de trémie (31) et un obturateur (34) pour ouvrir et fermer un orifice de libération (31b) du corps de trémie (31) ;
une machine de pesage (18) qui est reliée à l'unité de trémie (16) et est configurée pour mesurer un poids de la matière solide stockée dans l'unité de trémie (16) ;
un réservoir de mélange (20) qui est configuré pour stocker la matière solide apportée depuis l'unité d'apport de matière solide (12) via l'unité de trémie (16) et la matière liquide apportée depuis l'unité d'apport de matière liquide (14), et reçoit la matière solide libérée depuis l'unité de trémie (16) lorsque l'orifice de libération (31b) du corps de trémie (31) est ouvert par l'obturateur (34) ;
une unité de remplissage de mélange (22) qui est configurée pour remplir un récipient (100) avec un mélange de la matière solide et de la matière liquide stockées dans le réservoir de mélange (20) ; et
une unité de commande (38) qui est reliée à la machine de pesage (18) et à l'unité d'apport de matière liquide (14),
dans lequel l'unité de commande (38) est configurée pour commander à l'unité d'apport de matière liquide (14) d'ajuster une quantité de la matière liquide à apporter depuis l'unité d'apport de matière liquide (14) en fonction d'un résultat de mesure de la machine de pesage (18),
dans lequel l'unité d'apport de matière liquide (14) comporte un orifice de décharge pour décharger la matière liquide vers un intérieur de l'unité de trémie (16),
dans lequel l'orifice de décharge est agencé pour être orienté vers au moins l'une parmi une surface intérieure du corps de trémie (31) et une surface intérieure de l'obturateur (34), et
dans lequel l'unité de commande (38) est configurée pour commander à l'unité d'apport de matière liquide (14) de décharger la matière liquide depuis l'orifice de décharge après que la matière solide est apportée dans l'unité de trémie (16) depuis l'unité d'apport de matière solide (12), l'orifice de libération (31b) du corps de trémie (31) est ouvert par l'obturateur (34) et la matière solide entre dans le réservoir de mélange (20) depuis l'intérieur du corps de trémie (31) via l'orifice de libération (31b).

2. Appareil de remplissage de mélange (10) selon la revendication 1, dans lequel l'unité de commande (38) est configurée pour commander à l'unité d'apport de matière liquide (14) de décharger la matière liquide depuis l'orifice de décharge après que la machine de pesage (18) mesure le poids de la matière solide stockée dans l'unité de trémie (16), et l'orifice de libération (31b) du corps de trémie (31) est ouvert par l'obturateur (34).

3. Appareil de remplissage de mélange (10) selon la revendication 1 ou 2, comprenant en outre une unité de brassage (24) qui est configurée pour brasser la matière liquide et la matière solide dans le réservoir de mélange (20).

4. Appareil de remplissage de mélange (10) selon l'une quelconque des revendications 1 à 3, dans lequel l'unité de commande (38) est configurée pour acquérir le poids de la matière solide apportée dans l'unité de trémie (16) en fonction d'une différence entre une valeur de poids de la matière solide ayant adhéré à et restant dans l'unité de trémie (16) mesurée par la machine de pesage (18) avant que la matière solide ne soit apportée dans l'unité de trémie (16), et une valeur de poids de la matière solide dans l'unité de trémie (16) mesurée par la machine de pesage (18) après que la matière solide est apportée dans l'unité de trémie (16).

5. Appareil de remplissage de mélange (10) selon l'une quelconque des revendications 1 à 4, dans lequel l'orifice de libération (31b) du corps de trémie (31) est ouvert par l'obturateur (34) pendant que la matière liquide est déchargée depuis l'orifice de décharge de l'unité d'apport de matière liquide (14).

6. Méthode de remplissage de mélange comprenant :
une étape d'apport de matière solide pour apporter une matière solide à une unité de trémie (16) capable de stocker et de libérer la matière solide ;
une étape de mesure de poids pour mesurer un poids de la matière solide stockée dans l'unité de trémie (16) après l'étape d'apport de matière solide ;
une étape de libération de matière solide pour libérer la matière solide dans l'unité de trémie (16) dans un réservoir de mélange (20) après l'étape de mesure de poids ;
une étape de détermination de quantité d'apport de matière liquide pour déterminer une quantité d'une matière liquide à apporter dans le réservoir de mélange (20) en utilisant une valeur d'une quantité d'apport optimale de la matière liquide réglée à l'avance sur la base d'une valeur du poids de la matière solide en fonction d'un résultat de mesure à l'étape de mesure de poids, après l'étape de mesure de poids ;
une étape d'apport de matière liquide pour apporter la quantité déterminée de la matière liquide depuis une unité d'apport de matière liquide (14) à l'unité de trémie (16) et depuis celle-ci dans le réservoir de mélange (20) après l'étape de détermination de quantité d'apport de matière liquide et après l'étape de libération de matière solide ;
une étape de mélange pour stocker, dans le réservoir de mélange (20), la matière solide et la matière liquide apportées dans le réservoir de mélange (20) à l'étape de libération de matière solide et à l'étape d'apport de matière liquide et pour mélanger la matière solide et la matière liquide qui sont stockées à l'intérieur du réservoir de mélange (20) ; et
une étape de remplissage de mélange pour remplir un récipient (100) avec la matière solide et la matière liquide dans le réservoir de mélange (20) mélangées à l'étape de mélange.

7. Méthode de remplissage de mélange selon la revendication 6, dans laquelle, à l'étape d'apport de matière liquide, la matière liquide est apportée vers une surface intérieure de l'unité de trémie (16) de telle manière que la matière liquide ayant adhéré à la surface intérieure de l'unité de trémie (16) s'écoule vers le bas en raison de la matière liquide apportée et soit apportée dans le réservoir de mélange (20) avec la matière liquide.
